# EUROPEAN PATENT SPECIFICATION

(11) **EP 3 542 617 B1**
(45) Date of publication and mention of the grant of the patent: **24.02.2021**
(21) Application number: 19160563.3
(22) Date of filing: 04.03.2019
(51) Int. Cl.: A01G 9/00, G09F 3/10, G09F 3/20, G09F 3/02

(54) **LABEL**
ETIKETT
ÉTIQUETTE

(30) Priority: 08.03.2018 GB 201803694
(43) Date of publication of application: 25.09.2019
(73) Proprietor: S. Atwell Packaging Limited, Haywards Heath, West Sussex RH17 5PB (GB)
(72) Inventor: Charlesworth, David, Haywards Heath, West Sussex, RH17 5PB (GB)
(74) Representative: Windsor, Louise

(56) References cited:
- WO-A1-99/41727
- WO-A1-2010/129131
- CH-A5- 577 737
- US-A- 4 311 740
- US-A1- 2007 277 433
- US-A1- 2010 229 435
- US-B1- 6 641 048

## Description

The present invention relates to a label. In particular, the present invention relates to a label for use in flower labelling.

Automatic labelling machines are used in a range of industries, including the food, plant and flower industries. It is known to sell bunches of fresh flowers by bunching unwrapped products together and holding them with an adhesive label around their stems. Automatic labelling machines and labels for use directly with fresh products have to be carefully configured to avoid damaging the product. Furthermore, to preserve the freshness of the products, the labels need to be applied quickly and a high throughput of product has to be dealt with in a relatively short season.

However, existing automatic labelling machines and labels have been found to face problems because the label is not applied in the correct orientation. Any errors in the orientation of the label are likely to mean that the bunch of flowers is not secured, and/or that the printed information shown on the label cannot be clearly seen, and/or that a consumer is less likely to buy the produce because the aesthetic appeal is reduced. It is common in the packaging industry for products to be rejected and not used if they are incorrectly labelled because the labels used are single-use labels and cannot be removed and re-applied. Thus, any inaccurate labelling increases the amount of waste of the packaging materials and of the product, which is not cost effective and is not environmentally-friendly. If the automatic labelling machine is found to consistently apply labels incorrectly, an operator will need to re-adjust the machine. Any down-time to allow for readjustment causes delays in production, which is not desirable in view of both the cost and the time constraints of a short production season.

Prior art labels for manual labelling of patients; for example US6,641,048 and WO 2010/129131 disclose elongate strips formable into a wristband are known to place printed indicia on the wristband to be worn on the wrist of a patient. US 2007/0277433 discloses a seedling protection device comprising a flexible strip including an adhesive in the overlapping interior region forming a collar configured to extend around and affix to a seedling stem Document US2010/0229435 discloses an animal tagging apparatus and a flexible plastic tagging strip comprising adhesive sections and tapered end portions.

It is, therefore, an object of the present invention to seek to alleviate the above-identified problems.

The present invention provides a label for securing a bunch of elongate products, as defined in claim 1.

The particular shape and adhesive arrangement of the present invention has been found to be advantageous for ensuring correct alignment of labels applied using automatic labelling machines. Furthermore, it has been found that restricting the area to which adhesive is applied makes the label particularly suitable for labelling of delicate products, such as flowers. The tapered first end of the label is such that when the label is wrapped around a bunch of elongate products and the two adhesive areas meet, the first end is completely covered by the second end even when the two ends are imperfectly aligned. The present invention having adhesive applied in a triangular shape to the first tapered end and a longitudinal strip of the rectangular second end ensures that the loop is secure around the bunch of elongate products, without adhesive contacting the delicate product. Even if the ends of the label are not perfectly aligned, the loop is formed and secured by adhesive, and the aesthetic appeal of the label is not affected by any misalignment.

The label, within the first alternative, comprises adhesive applied to both corners of the first end and to both corners of the opposing second end of the label.

Preferably, the length of the label is between about 200mm and about 275mm.

By providing a label of sufficient length, the portion of the label between the adhesive applied to the first tapered end and the adhesive applied to the second substantially rectangular end portion can be wrapped around the elongate product, leaving the adhesive portions to be stuck together and hang freely. The protruding, free-hanging adhesive portions of the label are convenient, in use, for clear display of printed matter and for handling of delicate products.

Preferably, the length of the substantially rectangular portion is about 65% of the length of the label. More preferably, the length of the substantially rectangular portion is between about 62.5% and 67.5% of the length of the label.

Preferably, the label is a flower label and the elongate products are flowers.

Preferably, the label comprises at least one polypropylene (PP) layer and/or at least one polyethylene terephthalate (PET) and/or at least one paper layer.

Preferably, the at least one polypropylene (PP) has a thickness of about 23µm.

Preferably, the label comprises at least one layer of a gloss varnish. More preferably, the gloss varnish layer partially covers the surface area of a first face of the label.

Preferably, the gloss varnish is a silicon varnish.

Preferably, the label comprises at least one layer of a release varnish. More preferably, the release varnish is a silicon release varnish.

The gloss varnish applied to the label ensures that the label is only secured at the adhesive portions. This significantly improves the correct alignment of the label and so improves the speed and accuracy of the labelling process, when compared to prior art labels to which adhesive was applied across the entire surface area of the label.

Preferably, the adhesive is a hot melt adhesive.

Preferably, the adhesive is applied with a coat weight of 17g/m² ± 1g/m².

The adhesive pattern on the label is advantageous for correct label alignment and so is a significant improvement in both reducing waste in the label application process and enabling the process to be carried out at high speed, which in turn increases the number of bunches of flowers that can be labelled in a set time period of production. The particular arrangement of adhesive and the shape of the label allows for improved alignment of the label in the production process. The label can also be removed and re-applied, if the label is misaligned. The particular arrangement of the present invention also allows for printed matter to be clearly displayed on a free-hanging portion formed when the label is wrapped around the objects that it is securing. Furthermore, the application of adhesive to the ends/tip of the label ensures that the label stays flat to a backing layer on which it is stored when it is carried on a roll prior to application to the product. This prevents incorrect application of the label, and the risk of the roll-dispensed label becoming misaligned or removed from the roll, which can jam the labelling machine.

The label, within the second alternative, comprises a truncated circular area at the second end of the label.

The label for securing a bunch of elongate products comprises an intermediate portion that is substantially rectangular, wherein the intermediate portion tapers towards a first end having a lesser width than the intermediate portion and the label comprises a second end portion, which is a truncated circular area at the opposite end of the label to the first end.

The specific shape of the label has been found to be advantageous, particularly for applications that require the label to hold a bunch of fresh produce, such as flowers. The truncated circular end of the label allows for significantly improved alignment of the label when applied using an automatic labelling machine.

The label comprises adhesive spots applied to the corners of the first end and to a portion of the tip of the opposing end of the label.

By providing a label of sufficient length, the portion of the label between the adhesive applied to the first end and the adhesive applied to the intermediate portion can be wrapped around the elongate product, leaving the adhesive portions freely hanging to be stuck together.

The position and orientation of the information printed on the label means that, once the label is applied, the freely hanging part of the label is positioned on the right-hand side of the bunch of elongate products. This makes the label easier to read when in use.

A method of automatic labelling of a bunch of elongate products, not forming a part of the present invention, comprising the steps of:
inputting a series of bunches of elongate products;
applying a self-adhesive label as previously described to each of the series
of bunches of elongate products.

Preferably, the elongate products are flowers, wherein the flowers each comprise a stem and flower head.

Preferably, the labels are input with their narrowest edge leading.

Preferably, the labels comprise written information on the second end only.

Preferably, the method comprises wrapping the label around the elongate products such that the first and second end meet and are fixed together by their respective adhesive strips.

Preferably, the method comprises wrapping the label around the elongate products so that the first end and second end protrude from the elongate products when fixed together.

Preferably, the method comprises wrapping the label around the stems of the flowers so that the second end of the label, in use, protrudes to the right-hand side of the flower head when the flowers are in an upright orientation.

It is to be understood that "upright" orientation of a flower, or a bunch of flowers, means that the flower head is at the top above the flower stem. When the flowers are stacked in a box at the point of sale, the stems will be at the base of the box and the heads will be at the top of the box with the protruding part of the label extending from the right-hand side of each bunch of flowers.

The method ensures that labels are accurately applied to securely hold the product and allows information shown on the label to be clearly displayed. By avoiding the risk that the labels are incorrectly applied, this reduces any potential down-time in production and the need to stop machinery to adjust for more accurate label application. By avoiding the need to stop and start the machinery, the stress exerted on moving parts is reduced and so the wear and tear and maintenance requirements are also reduced. Furthermore, the invention has an environmental benefit because the amount of waste is reduced.

It will be appreciated that reference to "one or more" includes reference to "a plurality".

Within this specification embodiments have been described in a way which enables a clear and concise specification to be written, but it is intended and will be appreciated that embodiments may be variously combined, or separated, without parting from the invention. For example, it will be appreciated that all preferred features described herein are applicable to all aspects of the invention described herein and vice versa.

### DETAILED DESCRIPTION

Example embodiments of the present invention will now be described with reference to the accompanying Figures, in which
Figure 1 shows a view from above of a label of a first embodiment of the present invention;
Figure 2 shows a plan view of the underside of a label of the first embodiment of the present invention showing the areas to which adhesive, varnish and printed matter are applied;
Figure 3 shows a plan view of a label of a second embodiment of the present invention;
Figure 4 shows a plan view of the top face of the label to which printed matter is applied, a schematic of a varnish-free section, and the underside of a label to which adhesive and varnish are applied according to a second embodiment of the present invention;
Figure 5 shows a schematic illustration of an automatic labelling apparatus and is presented not as an embodiment of the invention but as an example useful for understanding the invention;
Figure 6a shows a plan view of the shape of a label of a further embodiment of the present invention;
Figure 6b shows a plan view of the shape of a label of a further embodiment of the present invention;
Figure 6c shows a plan view of the shape of a label of a further embodiment of the present invention.

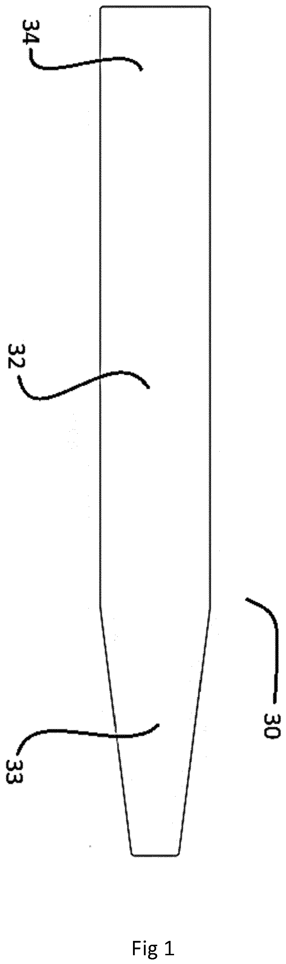

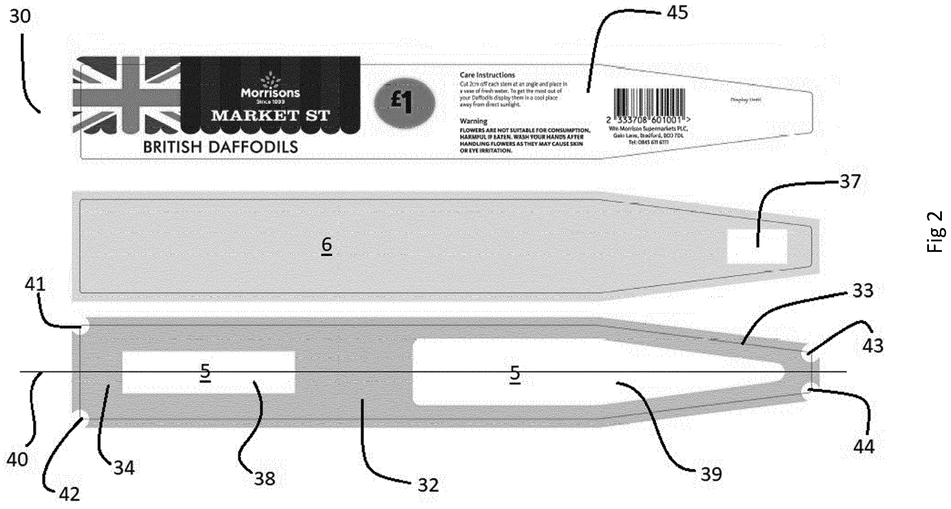

Referring to Figures 1 and 2, a first embodiment of the label 30 of the present invention is shown. The label 30 has a length of about 275mm and a width at its widest point of about 35mm. The laminar structure of the label 30 comprises a face paper, which is a smooth gloss board with a high white finish.

The label 30 is substantially rectangular and tapers towards a first end 33, having a width of about 14mm, opposite a substantially rectangular second end 34, having a width of about 35mm. The label 30 also comprises a substantially rectangular intermediate portion 32 between the first end 33 and second end 34, which has a width of 35m, which is an adhesive-free area and in use forms a loop around the elongate products. The substantially rectangular portion of the label 30 makes up between about 62.5% and 67.5% of its length with the remainder of the length being the tapered first end 33. The label 30 comprises a polypropylene (PP) liner on paper and has a thickness of about 23 µm.

Referring to Figure 2, the label 30 of the present invention further comprises areas to which an adhesive 5 is applied. The adhesive 5 is a hot melt, pressure- sensitive adhesive and is applied to the underside, or reverse surface of the label 30 with a coat weight of 17g/m² ± 1g/m². Prior to its application to the elongate products, the adhesive is protected by a backing liner (not shown). Multiple labels carried by the backing liner are carried on a roll.

The "underside" is understood to refer to the reverse surface of the label, which faces away from the upper surface of the label when applied to the elongate products and it is the underside that is affixed to the backing liner prior to use. It is the upper surface of the label that is visible in use. Adhesive 5 is applied on the underside surface which will face towards a product in use. The underside of the label 30 also comprises a layer of a silicon release varnish surrounding the adhesive portions 5, 38, 39, which enables the label 30 to be separated and re-applied in the event that it is not correctly aligned when applied to the product. In a preferred embodiment, the silicone release varnish is a UV silicone and the backing liner is a 40mic bi-orientated polypropylene.

Adhesive 5 is applied to six separate areas of the underside of the label 30. Firstly, a rectangular strip 38 of adhesive 5 is applied to the second end 34 of the label 30, wherein the strip 38 has a length of about 55mm and a width of about 12mm. A second, substantially triangular portion 39 of adhesive 5 is applied to the first tapered end 33. The width of the triangular adhesive portion 39 is about 55% of the corresponding width of the label 30 along the length of the portion 39. Both adhesive portions 38 and 39 are orientated substantially parallel to the longitudinal axis 40 of the label 30 with the central longitudinal axis of the adhesive portion co-incident with the longitudinal axis 40 of the label 30. The two adhesive portions 38 and 39 are positioned and shaped in this way so that when the label 30 is wrapped around a bunch of flowers (or any other suitable elongate product) the two adhesive portions 38 and 39 meet, fixing the first end 33 and the second end 34 of the label 30 together with a flat section protruding therefrom. The label 30 also comprises further adhesive portions 41, 42, 43, 44, at the first and second ends 33 and 34. The second end 34 of the label 30 comprises two adhesive spots 41 and 42 covering the two corners of the second end 34. The spots 41 and 42 have sides of length between about 2mm and 5mm. The first end 33 of the label 30 also comprises two adhesive spots 43, 44 at the two corners of the first end 33. The spots 43 and 44 have sides of length between about 2mm and 5mm. The adhesive portions 41 to 44 ensure that the label 30 stays flat and attached to the backing liner on which they are carried as a roll to ensure correct application to the product and preventing incorrect application of the label 30, and the risk of the roll-dispensed label becoming misaligned or removed from the roll, which can jam the labelling machine.

A gloss varnish 6 is also applied to the upper surface of the label 30, which has been found to be particularly advantageous to this application. The upper surface of the label 30 is understood to be the surface, which will face away from the product held therein and towards the user in use. A section 7 of the upper surface of the label 1 is left free of varnish, such that when the label 1 is wrapped around the product, the varnish-free section 7 meets the adhesive 5.

Referring to Figure 2, the label 30 further comprises an uppermost layer of printed matter, which allows a user to display information and artwork relating to the product to which the label is applied. The second end 34, in use, is not wrapped around the product but is flat and hangs freely protruding from the loop around product. This ensures that matter displayed on the second end 34 is clearly visible, even if multiple products are stacked together when the product is placed on display at the point of sale.

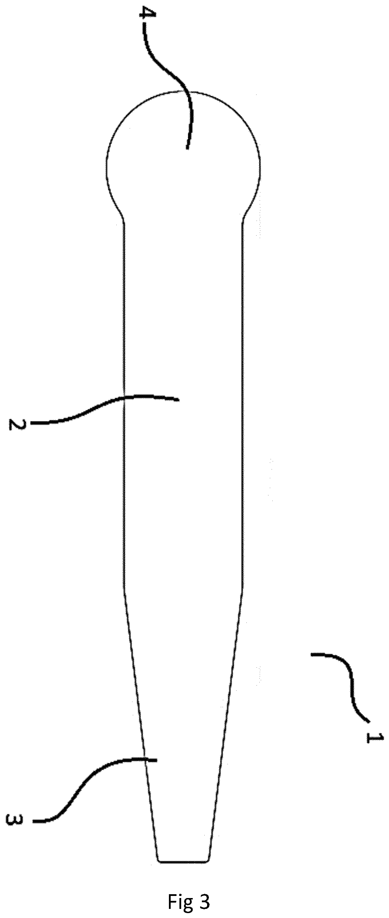

Referring to Figure 3, a second embodiment of the label 1 of the present invention is shown. The label 1 which has a length of about 225mm and a width at its widest point of about 45mm. The "length" is understood to be the greatest dimension of the label and the "width" is understood to be the dimension perpendicular to the length. In alternative embodiments of the invention the label has a width of about 25mm at its widest point. The laminar structure of the label 1 comprises a face paper, which is a smooth gloss board with a high white finish.

The label 1 comprises an intermediate portion 2 that is substantially rectangular having a width of about 35mm. The rectangular intermediate portion tapers towards the narrowest width of the label at a first end 3, which has a width of about 15mm. The second end 4 of the label 1 is at the opposite end to the first end 3 and is substantially circular having a diameter of about 45mm, wherein the circular end 4 is truncated where it meets the intermediate rectangular portion 2. The label 1 comprises a polypropylene (PP) liner on paper and has a thickness of about 23 µm.

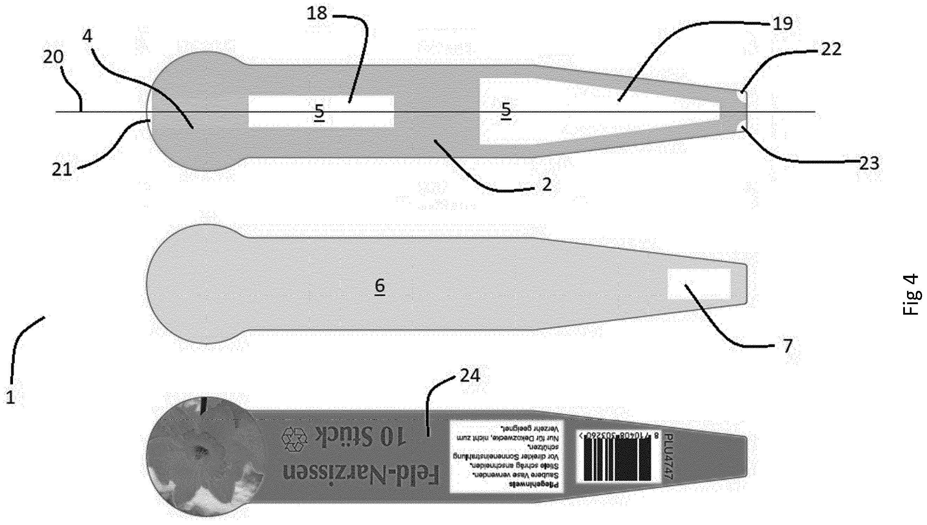

Referring to Figure 4, the label 1 of the present invention further comprises areas 18, 19 to which an adhesive 5 is applied. The adhesive 5 is a hot melt, pressure sensitive adhesive and is applied to the underside or reverse surface of the label 1 with a coat weight of 17g/m² ± 1g/m²; that is, adhesive 5 is applied on the surface which will face towards a product in use. The underside of the label also comprises a layer of a silicon release varnish, which enables the label to be separated and re-applied in the event that it is not correctly aligned when applied to the product.

Referring to Figure 4, the label comprises adhesive 5 at five separate areas 18, 19, 21, 22, 23 of the label 1. A first strip 18 of adhesive 5 is applied to the intermediate portion 2 of the label 1; the strip 18 has a length of about 55mm and a width of about 12mm. A second, substantially triangular portion 19 of adhesive 5 is at the first end 3. The width of the second adhesive portion 19 is about 55% of the corresponding width of the label 1 at any given point along the length of the portion 19. Both adhesive portions 18 and 19 are orientated parallel to the longitudinal axis 20 of the label 1 with the central longitudinal axis of the adhesive portion co-incident with longitudinal axis of the label. The two adhesive portions 18 and 19 are positioned and shaped in this way such that when the label 1 is wrapped around a bunch of flowers (or any other suitable elongate product) the two adhesive portions 18 and 19 meet, fixing the first end 3 and the intermediate portion 2 of the label 1 together, while leaving a flat section protruding therefrom and freely hanging.

The label 1 also comprises further adhesive spots 21, 22, 23 at the first and second ends 3 and 4. The first adhesive spot 21 at the second end covers a segment at the tip of the truncated circle 4 and is also centred along the longitudinal axis 20 of the label 1. The first end 3 of the label 1 comprises two adhesive spots 22 and 23 at the two corners of the first end 3. The adhesive spots 22 and 23 have sides of length between about 2mm and 5mm. The adhesive spots 21 to 23 ensure that the label 1 stays flat as it is dispensed from a backing liner on a roll carrying multiple labels to be applied to the product, reducing the risk that the roll-dispensed label is misaligned or removed prematurely from the roll, which can then jam the labelling machine.

A gloss varnish 6 is also applied to the upper surface of the label 1, which has been found to be particularly advantageous to this application. The upper surface of the label 1 is understood to be the surface, which will face away from the product and towards the user in use. A section 7 of the upper surface of the label 1 is left free of varnish, such that when the label 1 is wrapped around the product, the varnish-free section 7 meets the adhesive 5.

Referring to Figure 4, the label 1 further comprises an uppermost layer of printed matter, which allows a user to display information and artwork relating to the product to which the label is applied. The circular end 4, in use, is not wrapped around the product but hangs freely and protrudes from the loop around the product. This ensures that matter displayed on the circular end 4 is clearly visible, even if multiple products are stacked together when the product is placed on display at the point of sale.

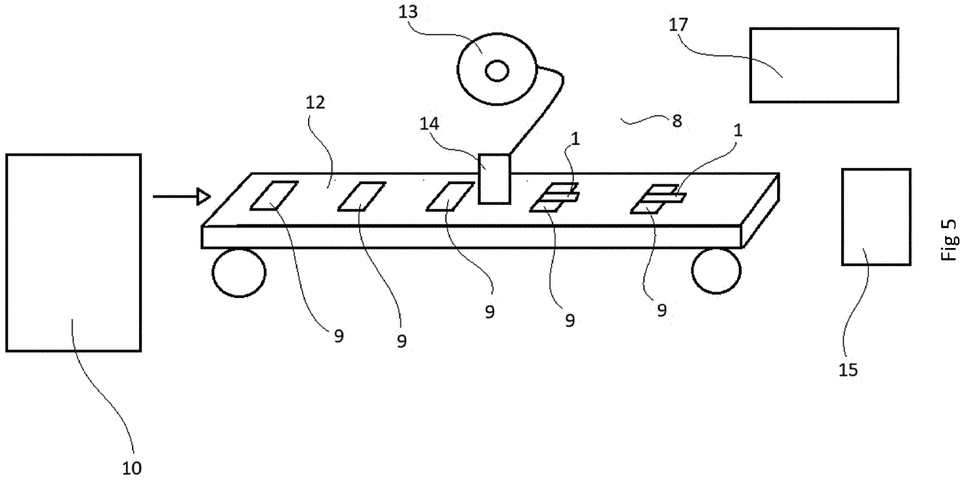

Referring to **Figure 5****,** a schematic of the automatic labelling apparatus 8, not forming a part of the present invention, is shown. It is to be understood that the application of the label is automatic, but other steps in the process may be carried out manually. The product 9 to be labelled is stored at input 10 before it is moved towards the labelling apparatus 8; for example, the products are moved along a conveyor belt 12. The products 9 are evenly spaced and the labelling apparatus 8 is pre-set according to the spacing of the products 9. The apparatus 8 uses sensors to detect and monitor the movement of the products 9 along the conveyor belt 12 A label roll 13 is positioned above the conveyor belt 12, from which labels 1, 30, as described with respect to Figures 1 to 4, are dispensed. The labels 1, 30 are input with their narrowest edge leading and applied around the product 9 by the wraparound unit 14.

Referring to Figures 2 and 5, the narrowest end i.e. the first end 33 of the label 30 is wrapped around the product 9 first, so that the adhesive 5 secures the intermediate portion 32 of the label 30 in a loop around the product 9. With the label 30 looped around the product 9, the first 33 and second 34 ends protrude from the product 9 and the printed face 24 of the label 30 is clearly visible. This orientation of the label 30 means that when it is applied to a bunch of flowers it is wrapped around the stems of the flowers and the second end 34 of the label 30 protrudes to the right of the flowers adjacent to the head of the flowers when they are in an upright position. The labelled final product 9 passes towards an output 15 to be stored. An operator is able to monitor progress of the labelling apparatus via a display 17.

Referring to Figures 4 and 5, the narrowest end, i.e. the first end 3 of the label 1 is wrapped around the product 9 first, so that the adhesive 5 secures the intermediate portion 2 of the label 1 in a loop around the product 9. With the label 1 looped around the product 9, the circular end 4 of each label 1 is left free to protrude from the product 9 and the printed face 24 of the label 1 is clearly visible. This configuration of the label 1 means that when it is applied to a bunch of flowers the label 1, 30 is wrapped around the stems of the flowers and the circular end 4 of the label 1 protrudes to the right of the flowers adjacent to the heads of the flowers when they are in an upright position. The labelled final product 9 passes towards an output 15 to be stored. An operator is able to monitor progress of the labelling apparatus via a display 17.

Material to be displayed to the consumer is only printed on the second end 4, 34 of the label 1, 30 so that it can be easily read once the label is applied using the method described above. In alternative embodiments of the invention, the second end of the label also comprises a "tear-off" portion, which is attached to the label a perforated strip. Thus, following sale a user can remove the "tear-off" portion by tearing along the perforated strip. This allows a user to remove the price label, as required.

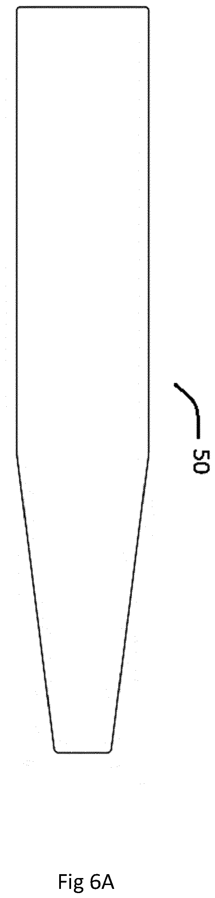

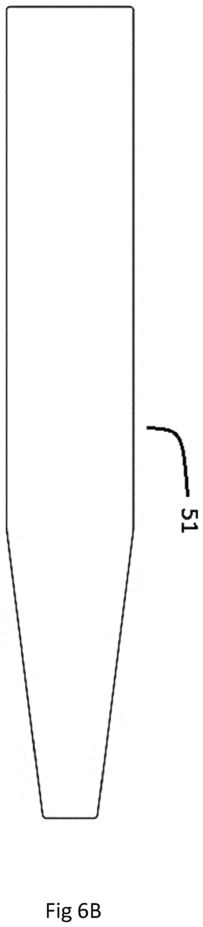

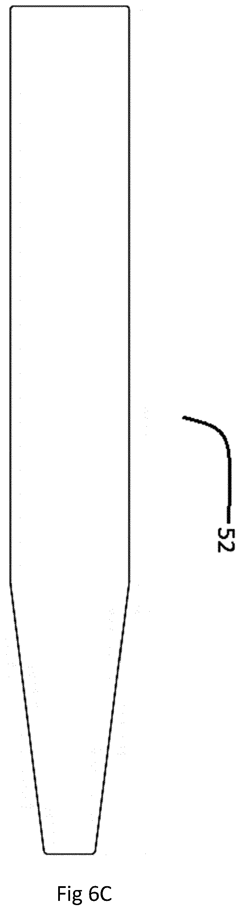

Referring to Figures 6a to 6c, labels 50, 51 and 52 are shown in accordance with the first embodiment of the present invention, each having alternative dimensions. Figure 6a shows a label 50 according to the first embodiment of the present invention with a length of about 200mm and a width at its widest point of about 35mm. Figure 6b shows a label 51 according to the first embodiment of the present invention with a length of about 225mm and a width at its widest point of about 35mm. Figure 6c shows a label 52 according to the first embodiment of the present invention with a length of about 250mm and a width at its widest point of about 35mm. It is to be understood that the adhesive patterns, varnish and printed matter for the label 51, 52, 53 would be the same as described for the label 30 above.

Within this specification, the term "about" means plus or minus 20%, more preferably plus or minus 10%, even more preferably plus or minus 5%, most preferably plus or minus 2%.

It should be understood that various changes and modifications to the presently preferred embodiments described herein will be apparent to those skilled in the art. Such changes and modifications can be made without departing from the scope of the present invention and without diminishing its attendant advantages. It is therefore intended that such changes and modifications are covered by the appended claims.

## Claims

1. A label (1, 30) for securing a bunch of elongate products, wherein the label is substantially rectangular comprising two discrete adhesive areas, such that when the label is wrapped around the elongate products the two adhesive areas meet to secure the label in a loop having an adhesive-free area forming the loop around the elongate products and a flat section protruding therefrom, and
wherein the label is substantially rectangular and tapers towards a first end (33, 3) having a width less than a second substantially rectangular end portion and wherein adhesive is applied in a substantially triangular shape (39, 19) to at least a first portion of the first tapered end of the label and adhesive is applied to a second longitudinal strip of a portion of the substantially rectangular second end, **characterised in that**:
i) the first end of the label comprises two adhesive spots (43, 44) at the two corners of the first end of the label and the second end of the label comprises two adhesive spots (41, 42) at the two corners of the second end of the label;
or
ii) the label comprises a truncated circular area at the second end (4) of the label and further comprises adhesive spots (22, 23) applied to the corners of the first end and to a portion of the tip (21) of the opposing end of the label.

2. A label according to claim 1, wherein the length of the label is between about 200mm and about 275mm.

3. A label according to any preceding claim, wherein the label is a flower label and the elongate products are flowers.

4. A label according to any preceding claim, wherein the label comprises at least one polypropylene (PP) layer and/or at least one polyethylene terephthalate (PET) and/or at least one paper layer; optionally, wherein the at least one polypropylene (PP) has a thickness of about 23µm.

5. A label according to any preceding claim, wherein the label comprises at least one layer of a gloss varnish; optionally, wherein the gloss varnish layer partially covers the surface area of a first face of the label; and/or wherein the gloss varnish is a silicon varnish.

6. A label according to any preceding claim, wherein the label comprises at least one layer of a release varnish; optionally, wherein the release varnish is a silicon release varnish.

7. A label according to any preceding claim, wherein the adhesive is a hot melt adhesive; optionally, wherein the adhesive is applied with a coat weight of 17g/m² ± 1g/m².

## Patentansprüche

1. Etikett (1, 30) zum Befestigen eines Bündels von länglichen Produkten, wobei das Etikett im Wesentlichen rechteckig ist und zwei getrennte Klebeflächen umfasst, so dass, wenn das Etikett um die länglichen Produkte gelegt wird, die zwei Klebeflächen aufeinandertreffen, um das Etikett in einer Schleife zu befestigen, die eine Klebstofffreie Fläche aufweist, die die Schleife um die länglichen Produkte bildet, und einen planen Bereich, der daraus vorsteht, und
wobei das Etikett im Wesentlichen rechteckig ist und sich zu einem ersten Ende (33, 3) hin verjüngt, wobei es eine Breite aufweist, die weniger ist als ein zweiter, im Wesentlichen rechteckiger Endabschnitt, und wobei Klebstoff in einer im Wesentlichen dreieckigen Form (39, 19) auf mindestens einen ersten Abschnitt des ersten sich verjüngenden Endes des Etiketts aufgetragen ist, und Klebstoff auf einen zweiten Längsstreifen eines Abschnitts des im Wesentlichen rechteckigen zweiten Endes aufgetragen ist, **dadurch gekennzeichnet, dass**:
i) das erste Ende des Etiketts zwei Klebepunkte (43, 44) an den zwei Ecken des ersten Endes des Etiketts umfasst, und das zweite Ende des Etiketts zwei Klebepunkte (41, 42) an den zwei Ecken des zweiten Endes des Etiketts umfasst;
oder
ii) das Etikett eine abgestumpfte Kreisfläche an dem zweiten Ende (4) des Etiketts umfasst und weiter Klebepunkte (22, 23) umfasst, die an den Ecken des ersten Endes und an einem Abschnitt der Spitze (21) des gegenüberliegenden Endes des Etiketts aufgetragen sind.

2. Etikett nach Anspruch 1, wobei die Länge des Etiketts zwischen ungefähr 200 mm und ungefähr 275 mm beträgt.

3. Etikett nach einem der vorstehenden Ansprüche, wobei das Etikett ein Blumenetikett ist und die länglichen Produkte Blumen sind.

4. Etikett nach einem der vorstehenden Ansprüche, wobei das Etikett mindestens eine Schicht aus Polypropylen (PP) und/oder mindestens ein Polyethylenterephthalat (PET) und/oder mindestens eine Papierschicht umfasst; wobei optional das eine Polypropylen (PP) eine Dicke von ungefähr 23 µm aufweist.

5. Etikett nach einem der vorstehenden Ansprüche, wobei das Etikett mindestens eine Schicht aus einem Glanzlack umfasst; wobei die Glanzlackschicht optional teilweise die Oberflächenfläche einer ersten Seite des Etiketts abdeckt; und/oder wobei der Glanzlack ein Silikonlack ist.

6. Etikett nach einem der vorstehenden Ansprüche, wobei das Etikett mindestens eine Schicht eines Trennlack umfasst; wobei der Trennlack optional ein Silikontrennlack ist.

7. Etikett nach einem der vorstehenden Ansprüche, wobei der Klebstoff ein Heißschmelzkleber ist; wobei der Klebstoff optional mit einem Beschichtungsgewicht von 17 g/m² ± 1 g/m² aufgetragen wird.

## Revendications

1. Étiquette (1, 30) pour fixer une botte de produits allongés, dans laquelle l'étiquette est sensiblement rectangulaire comprenant deux zones adhésives discrètes de telle sorte que, lorsque l'étiquette est enroulée autour des produits allongés, les deux zones adhésives se rencontrent pour fixer l'étiquette dans une boucle ayant une zone dépourvue d'adhésif formant la boucle autour des produits allongés et une section plate faisant saillie depuis celle-ci, et
dans laquelle l'étiquette est sensiblement rectangulaire et s'effile vers une première extrémité (33, 3) ayant une largeur inférieure à une seconde partie d'extrémité sensiblement rectangulaire et dans laquelle un adhésif est appliqué dans une forme sensiblement triangulaire (39, 19) à au moins une partie de la première partie effilée de l'étiquette et un adhésif est appliqué à une seconde bande longitudinale d'une partie de la seconde extrémité sensiblement rectangulaire, **caractérisée en ce que** :
i) la première extrémité de l'étiquette comprend deux points adhésifs (43, 44) au niveau des deux coins de la première extrémité de l'étiquette et la seconde extrémité de l'étiquette comprend deux points adhésifs (41, 42) au niveau des deux coins de la seconde extrémité de l'étiquette ;
ou
ii) l'étiquette comprend une zone circulaire tronquée au niveau de la seconde extrémité (4) de l'étiquette et comprend en outre des points adhésifs (22, 23) appliqués aux coins de la première extrémité et à une partie de la pointe (21) de l'extrémité opposée de l'étiquette.

2. Étiquette selon la revendication 1, dans laquelle la longueur de l'étiquette est entre environ 200 mm et environ 275 mm.

3. Étiquette selon l'une quelconque des revendications précédentes, dans laquelle l'étiquette est une étiquette de fleur et les produits allongés sont des fleurs.

4. Étiquette selon l'une quelconque des revendications précédentes, dans laquelle l'étiquette comprend au moins une couche de polypropylène (PP) et/ou au moins un polyéthylène téréphtalate (PET) et/ou au moins une couche de papier ; facultativement, dans laquelle le au moins un polypropylène (PP) présente une épaisseur d'environ 23 µm.

5. Étiquette selon l'une quelconque des revendications précédentes, dans laquelle l'étiquette comprend au moins une couche d'un vernis brillant; facultativement, la couche de vernis brillant recouvre partiellement l'aire superficielle d'une première face de l'étiquette ; et/ou dans laquelle le vernis brillant est un vernis au silicium.

6. Étiquette selon l'une quelconque des revendications précédentes, dans laquelle l'étiquette comprend au moins une couche d'un vernis de libération ; facultativement, dans laquelle le vernis de libération est un vernis de libération au silicium.

7. Étiquette selon l'une quelconque des revendications précédentes, dans laquelle l'adhésif est un adhésif thermofusible ; facultativement l'adhésif est appliqué avec un poids de revêtement de 17 g/m² ± 1 g/m².
